# EUROPÄISCHE PATENTSCHRIFT

(11) **EP 2 403 084 B1**
(45) Veröffentlichungstag und Bekanntmachung des Hinweises auf die Patenterteilung: **22.07.2015**
(21) Anmeldenummer: 11169555.7
(22) Anmeldetag: 10.06.2011
(51) Int. Cl.: H02G 11/00, H02G 15/007

(54) **Kabel- und Leitungsführung**
Cable and conduit guide
Guidage de câble et de conduite

(30) Priorität: 01.07.2010 DE 202010009722 U
(43) Veröffentlichungstag der Anmeldung: 04.01.2012
(73) Patentinhaber: Krones AG, 93073 Neutraubling (DE)
(72) Erfinder: Kirschner, Peter, 93073 Neutraubling (DE); Eggert, Holm, 93073 Neutraubling (DE); Wiltscheck, Sebastian, 93073 Neutraubling (DE); Benninghoven, Benjamin, 93073 Neutraubling (DE)
(74) Vertreter: Benninger, Johannes

(56) Entgegenhaltungen:
- WO-A1-95/28582
- DE-U1- 29 809 796
- DE-U1-202006 005 852
- DE-U1-202009 005 647

## Beschreibung

Die vorliegende Erfindung betrifft eine Anordnung zur Kabel- und Leitungsführung und/oder -verankerung für eine Mehrzahl von beweglich an einer Maschine zu halternden elektrischen Kabeln, hydraulischen und/oder pneumatischen Leitungen mit den Merkmalen des unabhängigen Anspruchs 1.

Relativ zueinander bewegliche Maschinenbaugruppen mit eigenständigen Antriebsteilen öder mit Energie zu versorgenden Teilen werden oftmals mit beweglichen und flexiblen Energieführungseinheiten verbunden. Diese Energieführungseinheiten sind weist als sog. Energieführungsketten ausgebildet, die auch als Kabelschleppzüge bezeichnet werden, können jedoch auch als allseitig bewegliche Schläuche ausgebildet sein. Diese bekannten Energieführungsketten oder Energieschläuche dienen zur sicheren Führung einer Vielzahl von elektrischen Leitungsverbindungen zwischen den zu verbindenden Baugruppen einer komplexeren Maschine. Um die Vielzahl von teilweise mehradrigen und ggf. unterschiedlich dicken Leitungen sicher führen und befestigen zu können, müssen die Leitungen an den Übergangsstellen zu den Energieführungsketten oder flexiblen Schläuchen einzeln mittels sog. Zugentlastüngen fixiert werden, was normalerweise im Übergangsbereich zur beweglichen Energieführungseinheit erfolg Aus der DE 20 2006 005 852 U1 ist bspw. eine solche Endbefestigung als Kabelzugentlastung einer Energieführungseinheit bzw. -kette bekannt.

Einen anderen Ansatz stellt die WO 95/28582 dar, gemäß dem Oberbegriff des Anspruchs 1, bei welcher die einzelnen Kabel jeweils nebeneinander durch ein Zugentlastungselement auf einer Traverse befestigt werden. Zu diesem Zweck wird das Zugentlastungselement in eine sich auf der Traverse befindliche Nut eingehakt und durch Anziehen einer Klemmschraube, welche von oben gegen das jeweilige Kabel eine Kraft ausübt, auf der Traverse fixiert; die Traverse bildet dabei gleichzeitig das Endglied einer Energieführungskette. Eine Weiterentwicklung dieses Zugenttastungselements, mit welchem mehrere Leitungen übereinander befestigt werden können, ist in der DE 20 2009 005 647 U1 beschrieben.

Ein weiteres Beispiel zur Befestigung eines Zugentlastungselements zeigt die DE 298 09 796 U1. Die Zugentlastung besteht aus einer Leiste mit in Kabelrichtung abstehenden Zinken, an welchen die einzelnen Kabel nebeneinander z.B. mittels Kabelbindern befestigt werden können. Die Leiste selbst wird mittels sich an der Unterseite befindlichen Rasthaken auf die Traverse einer Energieführungseinheit geklipst und kann mit Hilfe eines Hebelwerkzeugs wieder von ihr gelöst werden.

Bei den bekannten KabelzugentJastungen ist beim Verlegen der Kabel in der Energieführung allerdings ein erheblicher Moritageaufwand erforderlich. In diesem Zusammenhang werden zur Montagevorbereitung der Kabelzugentlastung an einem Energieschlauch für die elektrische Kabelinstallation zwei Kunststoffkämme mittels langer Schrauben und mehreren Gewindemuttern in einem gewissen Abstand voneinander positioniert. Da die Vormontage jedoch im Vorfeld oftmals nicht die genaue und die räumliche Anordnung der zu installierenden Kabeln und Medienleitungen kennt, wird meist ein provisorischer Zusammenbau vorgenommen. Wenn im späteren zeitlichen Ablauf die Kabel in die Maschine eingezogen werden, müssen die beiden Höhenpositionen der Befestigungskämme entsprechend auf die aktuelle Verkabelungssituation mit einem Schraubenschlüsselpaar umständlich angepasst werden. Dabei muss zwangsläufig immer der obere Befestigungskamm abgenommen werden, um die eine Ebene tiefer liegenden Kabelverbindungen einlegen und mit Kabelbindern an den Kämmen arretieren zu können. Abschließend wird der obere Kamm wieder mittels Schlüsselwerkzeug in der richtigen Höhe montiert, wonach die restlichen freien Kabel und Leitungen wiederum mit Kabelbindern am oberen Kamm befestigt werden können.

Ein Ziel der vorliegenden Erfindung besteht darin, eine universell einsetzbare, stabile und einfach und schnell montierbare und handhabbare Kabel-und/oder Leitungsfixierung für eine Energieführungseinheit zur Verfügung zu stellen.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Zur Erreichung des genannten Ziels schlägt die Erfindung eine Anordnung zur Leitungsführung und -verankerung für eine Mehrzahl von beweglich an einer Maschine zu halternden elektrischen Kabeln, hydraulischen und/oder pneumatischen Leitungen o. dgl. vor. Die Anordnung umfasst einen maschinenfesten Basisabschnitt zur Verankerung einer die Einzelleitungen und/oder -kabel führenden und/oder umhüllenden Stützstruktur sowie eine am Basisabschnitt fixierte Zugentlastungsbrücke zur geordneten Befestigung der zu den Maschinenteilen führenden Einzelleitungen und/oder -kabel nebeneinander und/oder übereinander. Gemäß der vorliegenden Erfindung ist die Zugentlastungsbrücke mit den zuvor daran befestigten Einzelleitungen oder -kabel ohne Zuhilfenahme von Werkzeug mit dem Basisabschnitt verbindbar und auch von diesem trennbar. Die erwähnte umhüllende flexible Stützstruktur kann bspw. durch eine sog. Energiekette gebildet sein. Die Stützstruktur kann jedoch insbesondere auch durch einen flexiblen Schlauch bzw. eine flexible Schlauchhülle gebildet sein, in dessen/deren Innenraum die Leitungen und Kabel geschützt über eine variable und sich im laufenden Betrieb durch die Beweglichkeit des Schlauchs verändernde Länge bzw. Lage geführt sind. Wahlweise kann die Zugentlastungsbrücke mittels einer Rastverbindung mit dem Basisabschnitt verbindbar sein, die vorzugsweise gegen die Rückstellkraft federnd nachgiebiger Rasthaken oder -zapfen mit dem Basisabschnitt verbunden und durch manuellen Druck auf die Rastverbindungen, -haken oder -zapfen wieder gelöst werden kann. Die Kabel- und/oder Leitungsverbindungen können wahlweise und zweckmäßigerweise zuvor bereits an der gewünschten Stelle an der Zugentlastungsbrücke befestigt worden sein, vorzugsweise mittels Kabelbindern oder ähnlichen Befestigungshilfen.

Wenn im vorliegenden Zusammenhang von Kabelverbindungen die Rede ist, so sind damit elektrische Steuer-, Signal- und/oder Versorgungsleitungen in Gestalt von ein- oder mehradrigen Kabeln gemeint. Diese Kabel können wahlweise als elektrisch leitende Kabel oder auch als Glasfaserkabel zur Lichtsignalübertragung ausgebildet sein. Wenn dagegen von Leitungsverbindungen die Rede ist, so sind damit bspw. auch hydraulische oder pneumatische Steuer- oder Speiseleitungen gemeint, die in der Regel als Druckschläuche unterschiedlicher Dicke ausgebildet sein können. Darüber hinaus können die Leitungsverbindungen unter Umständen auch als Kabelführungen zur mechanischen Steuerübertragung mittels Bowdenzug ausgestaltet sein. Grundsätzlich umfasst die vorliegende Verbindung alle denkbaren Varianten von Leitungsverbindungen der genannten Arten.

Die erfindungsgemäße Rastverbindung kann insbesondere mindestens zwei gegenüberliegend angeordnete Rastflächen aufweisen, die in korrespondierende Rastaufnahmen am Basisabschnitt eingreifen. So können die Rastflächen bspw. jeweils als federnd nachgiebige Rastzungen gebildet sein, die an ihrer Oberfläche abgestufte Bereiche zum Eingriff in die korrespondierenden Rastaufnahmen am Basisabschnitt aufweisen. Zudem können die korrespondierenden Rastaufnahmen am Basisabschnitt in gegenüber liegend angeordneten und zueinander parallelen Wandabschnitten des Basisabschnittes angeordnet sein, so dass damit eine werkzeuglos bedienbare und gleichzeitig sehr stabile Verankerung für die Kabel und/oder Leitungen geschaffen ist. Auf diese Weise kann der Energieschlauch mit den darin befindlichen Kabeln und Leitungen an beiden Enden jeweils mit Zugentlastungsbrücken vormontiert und anschließend mit den Basisabschnitten verbunden werden. Die Basisabschnitte sind dabei fest an einer Maschine bzw. an einem gegenüber der Maschine beweglich ausgebildeten Maschinenteil bzw. Modul montiert.

Die Zugentlastungsbrücke kann wahlweise eine, zwei, drei oder mehr Ebenen zur Leitungs- und/oder Kabelauflage und zu deren Verrastung und/oder Befestigung mittels Hilfsmitteln wie Kabelbindern o. dgl. aufweisen. Wenn im vorliegenden Zusammenhang von einer Zugentlastungsbrücke die Rede ist, so ist damit grundsätzlich jede denkbare Art von Kabel- und/oder Leitungsaufnahme zu deren Verankerung und Befestigung gemeint, die in eine lösbare rastende Verbindung mit dem maschinenfesten Basisabschnitt der erfindungsgemäßen Anordnung gebracht werden kann. Selbstverständlich kann die als Zugentlastungsbrücke bezeichnete Halterung auch andere Formen und Konturen als eine Brücke aufweisen. So kann sie bspw. als runde Leitungsdurchführung o. dgl. ausgestaltet sein.

Der Basisabschnitt kann in einer vorteilhaften Ausführungsvariante der erfindungsgemäßen Anordnung durch ein Blechbiegeteil gebildet sein, das eine Bodenfläche und wenigstens drei daran befestigte und senkrecht nach oben ragende Wandabschnitte aufweist. Dieses Blechbiegeteil lässt sich sehr schnell und kostengünstig durch Stanzen oder Laserschneiden aus einer Blechplatine herstellen, die anschließend einem 90°-Biegevorgang unterzogen wird, bei dem die vom Bodenteil nach oben ragenden Blechabschnitte jeweils um einen 90°-Winkel nach oben gebogen werden. Bei diesem Blechbiegeteil kann ein erster Wandabschnitt eine Durchführung sowie Befestigungsmittel zur lösbaren Verankerung der Stützstruktur, insbesondere des flexiblen Schlauches zur Aufnahme und Führung der Leitungen und/oder Kabel aufweisen. Darüber hinaus können die zweiten und dritten Wandabschnitte des Blechbiegeteils die Rastaufnahmen zur rastenden Befestigung der Zugentlastungsbrücke bilden bzw. aufweisen. Es sei darauf hingewiesen, dass das Blechbiegeteil wahlweise auch durch ein Spritzgussteil aus Kunststoff oder durch ein Druckgussteil aus Leichtmetall o. dgl. ersetzt werden kann, ohne dass dadurch der Erfindungsgedanke verändert wird. Wesentlich ist die Funktion des Basisabschnittes, die unabhängig vom gewählten Material und vom gewählten Fertigungs- und Bearbeitungsverfahren erfüllt werden kann. Auch die Zugentlastungsbrücke kann bspw. auch durch ein Spritzgussteil aus Kunststoff gebildet sein.

Vorzugsweise sind die Rastaufnahmen des Basisabschnittes und die Leitungs- bzw. Kabelauflagen der Zugentlastungsbrücke in einer Höhe positioniert, welche die Einzelleitungen und/oder -kabel passend zur Stützstruktur verlaufen lässt. Sinnvollerweise sind die Abmessungen so gewählt, dass die mit der Zugentlastungsbrücke fixierten und stabilisierten Kabel und Leitungen in etwa mittig durch den flexiblen Schlauch geführt sind. Die Bodenmontage der Zugentlastung am Bodenstück des Basisabschnittes kann völlig entfallen, ebenso die zeitaufwändige Montage einer Vielzahl von miteinander zu verbindenden Einzelteilen. Die schnell und einfach zu montierende und bei Bedarf wieder zu demontierende Rastverbindung der vorliegenden Erfindung sorgt dafür, dass die Kabel und Leitungen ungefähr mittig durch den Energieschlauch verlaufen und in dieser Lage weitgehend knickfrei und ohne zusätzliche Biegebelastungen gehalten sind. Insgesamt entsteht dadurch viel Platz für die Kabel und Leitungen, so dass die Kapazität der schützenden Schlauchhülle des Energieschlauches für eine Vielzahl von gleich oder unterschiedlich starken Kabeln und Leitungen optimal genutzt werden kann.

Die Zugentlastungsbrücke ist hinsichtlich ihrer Breite, der Anzahl ihrer Ebenen zur Aufnahme von Kabel und/oder Leitungen sowie der Anzahl der Leitungspositionen grundsätzlich nicht beschränkt. Die Kapazität richtet sich nach dem Bedarf und der Anzahl der zu sichernden Leitungen und ist lediglich durch den Durchmesser des Energieschlauches begrenzt.

Die erfindungsgemäße Anordnung liefert eine Zugentlastung, womit die Verbindung zwischen einer flexiblen elektrischen Leitung und dem End- oder Durchführungsstück eines Führungsschlauchs gegen mechanische Beanspruchung geschützt wird. Zu diesem Zweck werden die Leitungen eingeklemmt oder mittels Schraubverschluss oder Kabelbinder am End- oder Durchführungsstück fixiert. Verbreitet sind solche Zugentlastungen bei vielen flexiblen elektrischen Leitungen mit Kontaktanschlüssen, insbesondere bei Steckern und Anschlussdosen. Eine Zugentlastung bezeichnet man deshalb als eine mechanische Schutzvorrichtung für flexible elektrische und fluidführende Leitungen. Während bei den bekannten Zugentlastungen eine Vielzahl von Einzelteilen miteinander verbunden werden müssen, was die Montage relativ zeitaufwändig macht, entfällt dies bei der erfindungsgemäßen Anordnung, da hier die Kabel und Leitungen bereits fertig auf der Zugentlastungsbrücke vormontiert werden und diese anschließend durch eine Rastverbindung mit dem starren und vorzugsweise maschinenfest bzw. modulfest montierten Basisabschnitt verbunden werden können.

Die Zugentlastung besteht grundsätzlich nur noch aus einem Blechbiegeteil und einem einzelnen Spritzgusselement, ggf. ergänzt durch zusätzliche Verankerungsschrauben. Dieses Spritzgusselement kann in einer vorteilhaften Ausführungsvariante ein Einzelteil einer herkömmlichen Kunststoff-Energiekette sein, insbesondere eines Endstückes bzw. Anschlussstückes, da bei diesen bereits die Auflagen für die Kabel und Leitungen vorhanden sind. Das Glied besteht aus clipsbaren bzw. verrastbaren Querstegen, welche sich werkzeuglos zusammenbauen und wieder zerlegen lassen. Desweiteren lässt sich das Energiekettenglied in die zwei neuen Schenkellaschen des entsprechend dimensionierten Blechbiegeteils durch Zusammenclipsen bzw. Verrasten der Grundelemente ein- und ausbauen.

Wahlweise kann ein zusätzliches Sicherungsblech für eine permanente Stabilisierung der Clipsverbindungen sorgen, das mit dem Kunststoffteil der Zugentlastungsbrücke verschraubt sein kann. Nach der Montage führen die Kabel durch eine genaue Ausführung der Blechbiegehalterung in axialer Aus- und Einlaufrichtung immer genau mittig aus dem bzw. in den Energieführungsschlauch. Durch eine feste Vorgabe der eingeclipsten Befestigungskämme der Zugentlastungsbrücke ist ein Unterschreiten der Mindestbiegeradien der flexiblen Kabel und Leitungen nicht mehr möglich, wogegen bei den bekannten Zugentlastungskämmen oftmals das Problem bestand, dass sie in der Höhe regulierbar waren und dadurch oftmals nicht optimal eingestellt wurden. Bei der erfindungsgemäßen Anordnung müssen nun nicht mehr umständlich mit Werkzeug mehrere Schrauben und Muttern angezogen werden, um die Kämme einzustellen.

Bei einer fehlerhaften Kabel- oder Leitungsverlegung oder bei später notwendigen Erweiterungen der Kabelstränge sind nach einfachem Demontieren des optionalen Sicherungsbleches die oberen und unteren Zugentlastungskämme problemlos zu demontieren. Es kann angenommen werden, dass durch die einfach zu montierende Zugentlastungsanordnung bei einer Maschine mit je zwei Zugentlastungen je Energieschlauch eine Montagezeit von mehreren Minuten eingespart werden kann, da der erste Zusammenbau komplett entfällt und die Montageperson somit den modular vormontierten Energieschlauch wesentlich schneller montieren kann.

Die Erfindung wird nachfolgend anhand von Ausführungsbeispielen unter Bezugnahme auf die beiliegenden Zeichnungen näher erläutert. Die Figuren illustrieren und verdeutlichen nicht einschränkend zu verstehende Ausführungsbeispiele der vorliegenden Erfindung in ihren Details und Funktionen.
Fig. 1 zeigt in zwei schematischen Perspektivansichten einen sog. Energieschlauch gemäß bekanntem Stand der Technik.
Fig. 2 zeigt eine Draufsicht auf eine Leitungsführung gemäß bekanntem Stand der Technik.
Fig. 3 zeigt zwei Ansichten einer Ausführungsvariante eines erfindungsgemäßen Energieschlauches.
Fig. 4 zeigt eine perspektivische Ansicht einer erfindungsgemäßen Anordnung zur Leitungsführung.
Fig. 5 zeigt eine weitere perspektivische Ansicht der Leitungsführung gemäß Fig. 4.
Fig. 6 zeigt eine weitere perspektivische Ansicht der Leitungsführung gemäß Fig. 4.

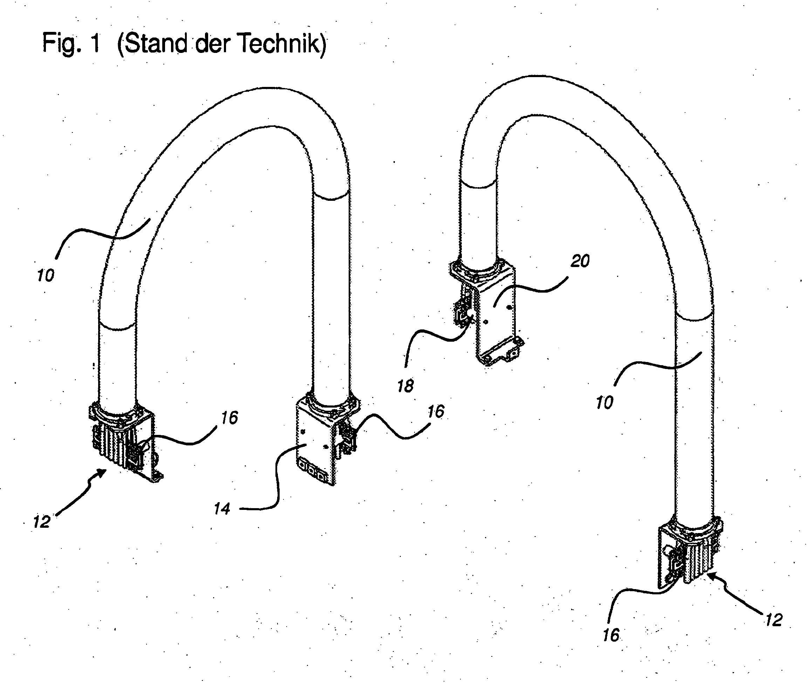

Die schematische Darstellung der Fig. 1 zeigt in zwei schematischen Perspektivansichten einen sog. Energieschlauch 10, wie er aus dem Stand der Technik bekannt ist. Ein solcher Energieschlauch 10 wird bspw. eingesetzt, um ein bewegliches Maschinenmodul (nicht dargestellt), das über Signal- und/oder Energieversorgungsleitungen mit einer stationären Maschine verbunden werden muss, an diese Maschine (ebenfalls nicht dargestellt) anzuschließen. Die in der Fig. 1 sichtbare Hülle des Energieschlauchs 10 dient zur Führung, Umhüllung und zum Schutz einer Mehrzahl darin geführter Leitungen 12 oder Kabel, die eine elektrisch leitende Verbindung zwischen den Maschinenteilen herstellen sollen. Jedes der beiden Enden des Energieschlauchs 10 ist an einem Anschlussstück 14 befestigt, das gleichzeitig eine Zugentlastungsbrücke 16 zur Befestigung der Leitungen 12 trägt. Die Leitungen 12 können bspw. mittels Kabelbindern parallel nebeneinander auf der Zugentlastungsbrücke 16 montiert werden. Die in der Fig. 1 erkennbaren Zugentlastungsbrücken 16 sind jeweils über Distanzstücke 18 mit einem Bodenabschnitt 20 des Anschlussstücks 14 verschraubt, so dass sie je nach Bedarf in ihrer Höhe ausgerichtet werden können, um die Leitungen 12 annähernd mittig durch den Energieschlauch 10 verlaufen zu lassen. Diese bisher eingesetzte Bodenmontage der Zugentlastung 16 am Bodenstück 20 des Anschlussstücks 14 ist jedoch relativ zeitaufwändig, da es die Montage einer Vielzahl von miteinander zu verbindenden Einzelteilen erfordert.

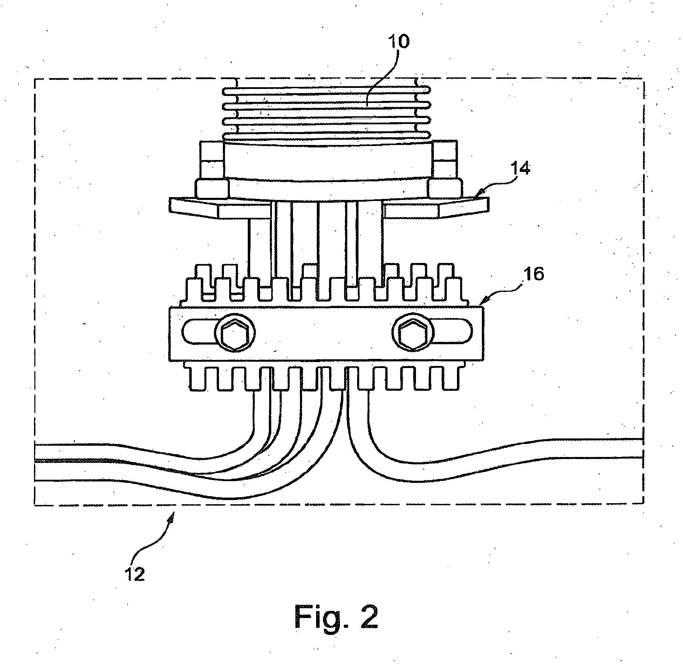

Die Draufsicht der Fig. 2 zeigt eine Leitungsführung eines aus dem Stand der Technik bekannten Energieschlauches 10 mittels eines Anschlussstückes 14, an dem mittels zwei Gewindebolzen eine zweilagige Zugentlastungsbrücke 16 montiert ist. An deren Kämme können die Leitungen 12 verankert werden, wonach entsprechend Fig. 2 eine nahezu beliebige Leitungsverlegung in der Maschine ermöglicht ist.

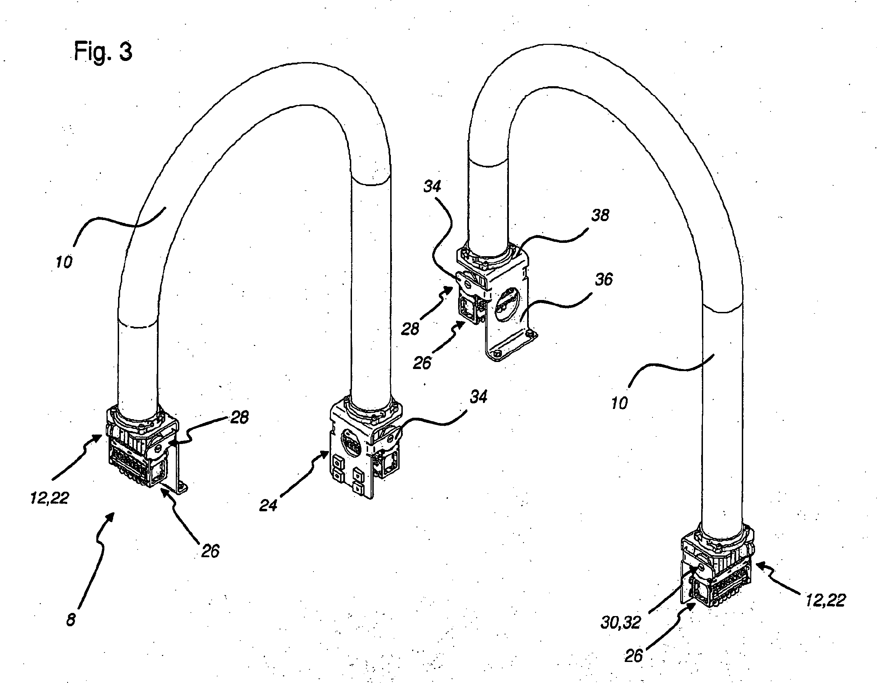

Die beiden perspektivischen Ansichten der Fig. 3 zeigen eine bevorzugte Ausführungsvariante eines Energieschlauches 10, der Teil einer erfindungsgemäßen Anordnung 8 zur Leitungsführung und -verankerung für eine Mehrzahl von beweglich an einer Maschine (nicht dargestellt) zu halternden elektrischen Kabeln 22, hydraulischen und/oder pneumatischen Leitungen o. dgl. ist. Die Anordnung 8 umfasst einen maschinenfesten Basisabschnitt 24 zur Verankerung einer die Einzelleitungen 12 und/oder -kabel 22 führenden und/oder umhüllenden Stützstruktur in Gestalt des Energieschlauchs 10 sowie eine am Basisabschnitt 24 fixierte Zugentlastungsbrücke 26 zur geordneten Befestigung der zu den Maschinenteilen führenden Einzelleitungen 12 und/oder -kabel 22 nebeneinander und übereinander. Die Stützstruktur kann bspw. eine sog. Energiekette sein, ist jedoch im vorliegenden Ausführungsbeispiel durch die flexible Schlauchhülle gebildet, in deren Innenraum die Leitungen 12 und Kabel 22 geschützt über eine variable und sich im laufenden Betrieb durch die Beweglichkeit des Schlauchs verändernde Länge geführt sind. Die Zugentlastungsbrücke 26 ist mittels einer Rastverbindung 28 lösbar mit dem Basisabschnitt 24 verbunden. Diese Rastverbindung 28 ermöglicht die Verrastung der Zugentlastungsbrücke 26 mit dem Basisabschnitt 24 durch Eingriff von federnd nachgiebigen Zapfen 30 in entsprechende Ausnehmungen des Basisabschnitts 24, wobei die Verrastung durch manuellen Druck auf die Zapfen 30 wieder gelöst werden kann. Die Kabel- und/oder Leitungsverbindungen 22, 12 werden zuvor an den gewünschten Positionen an der Zugentlastungsbrücke 26 befestigt, vorzugsweise mittels Kabelbindern oder ähnlichen Befestigungshilfen.

Die gezeigte Rastverbindung 28 umfasst zwei gegenüberliegend angeordnete Rastelemente, die durch die beiden Zapfen 30 gebildet sind, die in korrespondierende Rastaufnahmen 32 am Basisabschnitt 24 eingreifen, die in gegenüber liegend angeordneten und zueinander parallelen Wandabschnitten 34 des Basisabschnittes 24 angeordnet sind, so dass damit eine werkzeuglos bedienbare und gleichzeitig sehr stabile Verankerung für die Kabel 12 und/oder Leitungen 22 geschaffen ist.

Die Zugentlastungsbrücke 26 weist im gezeigten Ausführungsbeispiel zwei parallele Ebenen zur Leitungs- und/oder Kabelauflage und zu deren Verrastung und/oder Befestigung mittels Hilfsmitteln wie Kabelbindern o. dgl. auf.

Der Basisabschnitt 24 ist in der dargestellten Ausführungsvariante der erfindungsgemäßen Anordnung 8 durch ein Blechbiegeteil gebildet, das eine Bodenfläche 36 und insgesamt drei daran befestigte und senkrecht zur Bodenfläche 36 ausgerichtete Wandabschnitte 34 aufweist. Bei dem gezeigten Blechbiegeteil dient ein erster Wandabschnitt 38 zur lösbaren Verankerung des flexiblen Energieschlauches 10 zur Aufnahme und Führung der Kabel 12 und/oder Leitung 22. Darüber hinaus weisen die zweiten und dritten Wandabschnitte 34 des Blechbiegeteils die oben erwähnten Rastaufnahmen zur rastenden Befestigung der Zugentlastungsbrücke 26 auf.

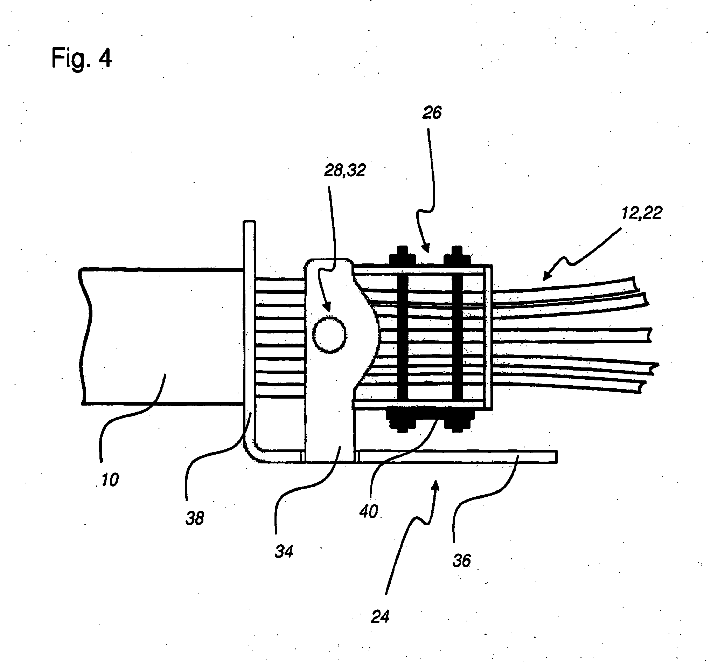

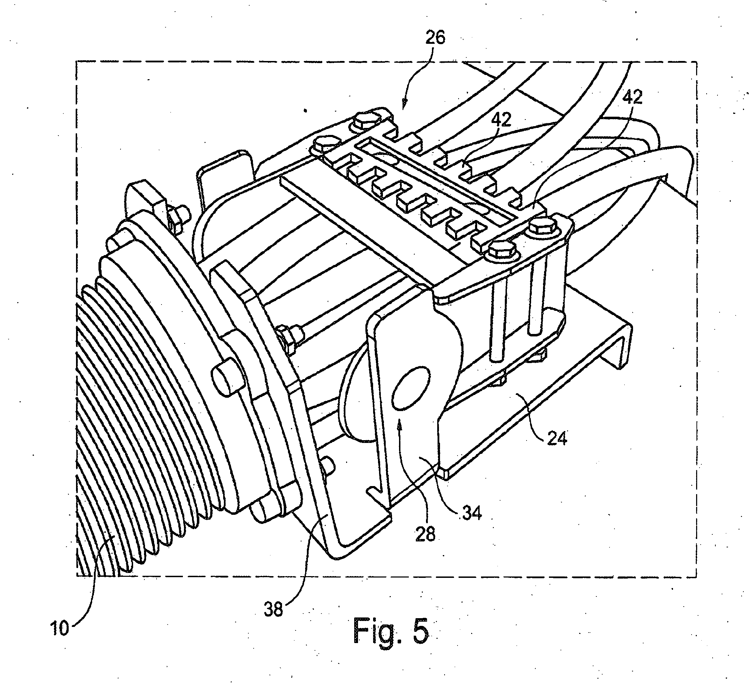

Wie anhand der Figuren 4 bis 6 verdeutlicht, sind die Rastaufnahmen 32 des Basisabschnittes 24 und die Leitungs- bzw. Kabelauflagen der Zugentlastungsbrücke 26 in einer Höhe positioniert, welche die Einzelleitungen 12 und/oder -kabel 22 passend zum Verlauf des Energieschlauchs 10 anordnet. Sinnvollerweise sind die Abmessungen so gewählt, dass die mit der Zugentlastungsbrücke 26 fixierten und stabilisierten Kabel 22 und Leitungen 12 in etwa mittig durch den flexiblen Schlauch 10 geführt sind. Die Bodenmontage der Zugentlastung 26 am Bodenstück 36 des Basisabschnittes 24 kann aufgrund der Rastverbindungen 28 völlig entfallen, ebenso die zeitaufwändige Montage einer Vielzahl von miteinander zu verbindenden Einzelteilen. Die schnell und einfach zu montierende und bei Bedarf wieder zu demontierende Rastverbindung 28 der erfindungsgemäßen Anordnung 8 sorgt dafür, dass die Kabel 22 und Leitungen 12 ungefähr mittig durch den Energieschlauch 10 verlaufen und in dieser Lage weitgehend knickfrei und ohne zusätzliche Biegebelastungen gehalten sind. Insgesamt entsteht dadurch viel Platz für die Kabel 22 und Leitungen 12, so dass die Kapazität der schützenden Schlauchhülle des Energieschlauches 10 für eine Vielzahl von gleich oder unterschiedlich starken Kabeln 22 und Leitungen 12 optimal genutzt werden kann.

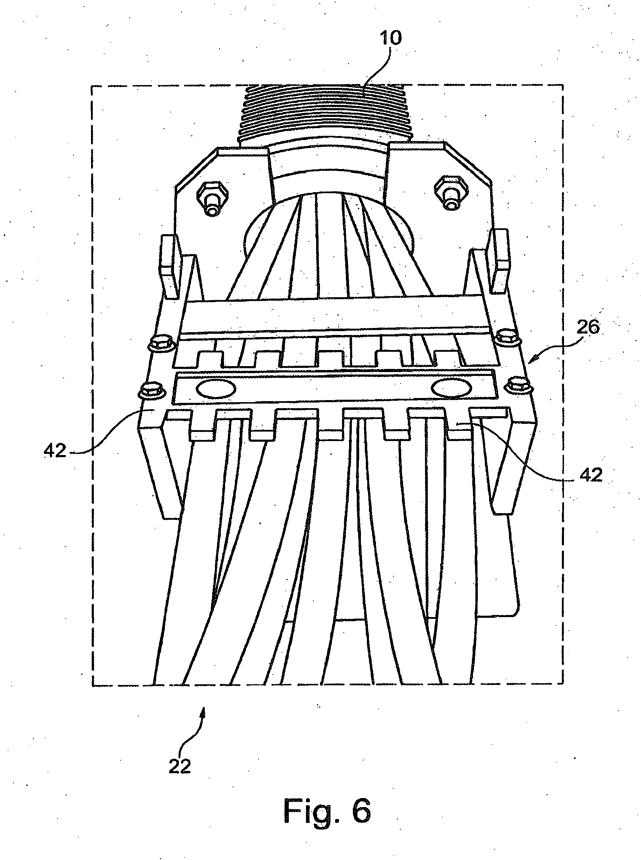

Die Fig. 4 verdeutlicht ein zusätzliches Sicherungsblech 40, das für eine permanente Stabilisierung der Clipverbindungen sorgen kann. Das Sicherungsblech 40 ist über insgesamt vier Schrauben mit dem Kunststoffteil der Zugentlastungsbrücke 26 verschraubt und verspannt diese. Nach der Montage führen die Kabel 22 durch eine genaue Ausführung der Blechbiegehalterung in axialer Aus- und Einlaufrichtung immer genau mittig aus dem bzw. in den Energieführungsschlauch 10. Durch eine feste Vorgabe der eingeclipsten Befestigungskämme 42 der Zugentlastungsbrücke 26 (vgl. Fig. 6) ist ein Unterschreiten der Mindestbiegeradien der flexiblen Kabel 22 und Leitungen 12 nicht mehr möglich.

Die verwendete Zugentlastungsbrücke 26 kann vorteilhaft aus einem Endstück einer an sich bekannten Energiekette gebildet sein, ggf. in leicht modifizierter Form, bspw. hinsichtlich der Anzahl, Ausrichtung und Positionierung der Befestigungskämme 42.

Wahlweise kann nicht nur die Zugentlastungsbrücke 26, sondern auch der Basisabschnitt 24 aus spritzgegossenem Kunststoff gefertigt sein, da sich diese Bauteile in größeren Stückzahlen besonders kostengünstig herstellen lassen. Für kleinere Serien oder besonders stabile Energieschlauchverankerungen kann jedoch der Basisabschnitt 24 in der gezeigten Weise aus einem Blechbiegeteil, bspw. aus rostfreiem Stahl mit einer Stärke von wenigstens 2 mm, gebildet sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 8: Anordnung zur Leitungsführung
- 10: Energieschlauch
- 12: Leitungen
- 14: Anschlussstück (Stand der Technik)
- 16: Zugentlastungsbrücke (Stand der Technik)
- 18: Distanzstücke
- 20: Bodenabschnitt
- 22: Kabel
- 24: Basisabschnitt
- 26: Zugentlastungsbrücke
- 28: Rastverbindung
- 30: Zapfen
- 32: Rastaufnahmen
- 34: Wandabschnitt
- 36: Bodenfläche
- 38: Wandabschnitt
- 40: Sicherungsblech
- 42: Befestigungskämme

## Patentansprüche

1. Anordnung (8) zur Leitungsführung und -verankerung für eine Mehrzahl von beweglich an einer Maschine zu halternden elektrischen Kabeln (22), hydraulischen und/oder pneumatischen Leitungen (12) o. dgl., umfassend einen maschinenfesten Basisabschnitt (24) zur Verankerung einer die Einzelleitungen (12) und/oder -kabel (22) führenden und/oder umhüllenden Stützstruktur sowie eine am Basisabschnitt (24) fixierte Zugentlastungsbrücke (26), **dadurch gekennzeichnet, dass** die am Basisabschnitt (24) fixierte Zugentlastungsbrücke (26) zur geordneten Befestigung der zu Maschinenteilen führenden Einzelleitungen (12) und/oder -kabel (22) nebeneinander und/oder übereinander werkzeuglos mit dem Basisabschnitt (24) verbindbar und von diesem trennbar ist, wobei die Zugentlastungsbrücke (26) mittels einer Rastverbindung (28) mit dem Basisabschnitt (24) verbindbar ist, wobei die Rastverbindung (28) mindestens zwei gegenüberliegend angeordnete Rastflächen aufweist, die in korrespondierende Rastaufnahmen (32) am Basisabschnitt (24) eingreifen, und wobei die Rastflächen jeweils durch federnd nachgiebige Rastzungen gebildet sind, die an ihrer Oberfläche abgestufte Bereiche zum Eingriff in die korrespondierenden Rastaufnahmen (32) am Basisabschnitt (24) aufweisen.

2. Anordnung nach Anspruch 1, bei der die Rastaufnahmen (32) am Basisabschnitt (24) in gegenüber liegend angeordneten und zueinander parallelen Wandabschnitten (34) des Basisabschnittes (24) angeordnet sind.

3. Anordnung nach einem der Ansprüche 1 bis 2, bei der die Zugentlastungsbrücke (26) eine, zwei oder drei Ebenen zur Leitungs- und/oder Kabelauflage und zu deren Verrastung und/oder Befestigung mittels Hilfsmitteln wie Kabelbindern o. dgl. aufweist.

4. Anordnung nach einem der Ansprüche 1 bis 3, bei welcher der Basisabschnitt (24) durch ein Blechbiegeteil gebildet ist, das eine Bodenfläche (36) und wenigstens drei daran befestigte und senkrecht nach oben ragende Wandabschnitte (34, 38) aufweist.

5. Anordnung nach Anspruch 4, bei der ein erster Wandabschnitt (38) eine Durchführung und Befestigungsmittel zur lösbaren Verankerung der Stützstruktur aufweist.

6. Anordnung nach Anspruch 4 oder 5, bei der die zweiten und dritten Wandabschnitte (34) die Rastaufnahmen (32) zur rastenden Befestigung der Zugentlästungsbrücke (26) bilden bzw. aufweisen.

7. Anordnung nach einem der Ansprüche 3 bis 6, bei der die Rastaufnahmen (32) und die Leitungs- bzw. Kabelauflagen in einer Höhe positioniert sind, welche die Einzelleitungen(12) und/oder -kabel (22) passend zur Stützstruktur führen.

8. Anordnung nach einem der Ansprüche 1 bis 7, bei der die Zugentlastungsbrücke (26) durch ein Spritzgussteil aus Kunststoff gebildet ist.

9. Anordnung nach einem der Ansprüche 1 bis 8, bei welcher der maschinenfeste Basisabschnitt (24) durch ein Spritzgussteil, insbesondere aus Kunststoff gebildet ist.

## Claims

1. An arrangement (8) for conduit guiding and conduit anchoring for a plurality of electrical cables (22), hydraulic and/or pneumatic conduits (12), or the like, to be movably mounted on a machine, said arrangement (8) comprising a machine-attached base section (24) for anchoring a support structure, which guides and/or surrounds the individual conduits (12) and/or individual cables (22), and comprising a strain relief bridge (26) attached at the base section (24), **characterised in that** the strain relief bridge (26) that is attached at the base section (24) is toollessly connectable to and disconnectable from the base section (24) to enable the individual conduits (12) and/or the individual cables (22) leading to machine parts to be orderly fastened next to each other and/or on top of each other, wherein the strain relief bridge (26) is connectable to the base section (24) by means of a snap-lock connection (28), wherein the snap-lock connection (28) has at least two snap-in surfaces arranged opposite each other, which engage with corresponding snap-in receptions (32) at the base section (24), and wherein the snap-in surfaces are respectively formed by resiliently yielding snap-in tongues, which have tiered sections on their surface for engaging with the corresponding snap-in receptions (32) at the base section (24).

2. The arrangement as recited in claim 1 wherein the snap-in receptions (32) at the base section (24) are arranged in wall sections (34) of the base section (24), which wall sections (34) are positioned opposite and parallel to each other.

3. The arrangement as recited in one of the claims 1 to 2 wherein the strain relief bridge (26) has one, two or three levels for supporting and snap locking and/or fastening conduits and/or cables using auxiliary means such as cable straps or the like.

4. The arrangement as recited in one of the claims 1 to 3 wherein the base section (24) is formed by a bent sheet metal part having a base section (36) and, attached thereto, at least three wall sections (34, 38) protruding vertically upward.

5. The arrangement as recited in claim 4 wherein a first wall section (38) has a duct and attaching means for detachable anchoring of the support structure.

6. The arrangement as recited in claim 4 or 5 wherein the second and third wall sections (34) form or comprise the snap-in receptions (32) for the snap-lock attachment of the strain relief bridge (26).

7. The arrangement as recited in one of the claims 3 to 6 wherein the snap-in receptions (32) and the conduit supports or cable supports are positioned to guide the individual conduits (12) and/or the individual cables (22) at a height that is adapted to that of the support structure.

8. The arrangement as recited in one of the claims 1 to 7, wherein the strain relief bridge (26) is formed by an injection moulding part made from synthetic material.

9. The arrangement as recited in one of the claims 1 to 8, wherein the machine-attached base section (24) is formed by an injection moulding part made, in particular, from synthetic material.

## Revendications

1. Ensemble (8) de guidage et d'ancrage de conduites pour une pluralité de câbles électriques (22), conduites (12) hydrauliques et/ou pneumatiques ou similaires à supporter de manière mobile sur une machine, comprenant une portion de base (24) fixée sur la machine et destinée à l'ancrage d'une structure d'appui guidant et/ou enveloppant les conduites (12) et/ou câbles (22) individuels ainsi qu'un pont de décharge de traction (26) qui est fixé sur ladite portion de base (24), **caractérisé par le fait que** le pont de décharge de traction (26) fixé sur la portion de base (24) et destiné à la fixation ordonnée, les uns à côté des autres et/ou les uns sur les autres, des conduites (12) et/ou câbles (22) individuels menant vers des parties de machine peut être relié sans outil à ladite portion de base (24) et être séparé sans outil de celle-ci, le pont de décharge de traction (26) pouvant être relié au moyen d'un assemblage à encliquetage (28) à ladite portion de base (24), ledit assemblage à encliquetage (28) présentant au moins deux surfaces d'arrêt qui sont disposées en regard et qui s'engagent dans des logements d'arrêt (32) correspondants sur ladite portion de base (24), et les surfaces d'arrêt étant formées chacune par des languettes d'arrêt élastiquement flexibles qui présentent, sur leur surface, des zones étagées pour l'engagement dans les logements d'arrêt (32) correspondants sur la portion de base (24).

2. Ensemble selon la revendication 1, dans lequel les logements d'arrêt (32) sur la portion de base (24) sont disposés dans des portions de paroi (34) de la portion de base (24) qui sont disposées en vis-à-vis et parallèles entre elles.

3. Ensemble selon l'une quelconque des revendications 1 à 2, dans lequel ledit pont de décharge de traction (26) présente un, deux ou trois plans pour l'appui de conduites et/ou de câbles et pour l'encliquetage et/ou la fixation de ceux-ci au moyen d'aides telles qu'attaches-câbles ou similaires.

4. Ensemble selon l'une quelconque des revendications 1 à 3, dans lequel la portion de base (24) est formée par une pièce pliée en tôle qui présente une surface de fond (36) et au moins trois portions de paroi (34, 38) fixées sur celle-ci et faisant saillie verticalement vers le haut.

5. Ensemble selon la revendication 4, dans lequel une première portion de paroi (38) présente un passage et des moyens de fixation pour l'ancrage amovible de ladite structure d'appui.

6. Ensemble selon la revendication 4 ou 5, dans lequel les deuxième et troisième portions de paroi (34) forment ou bien présentent les logements d'arrêt (32) pour la fixation à encliquetage du pont de décharge de traction (26).

7. Ensemble selon l'une quelconque des revendications 3 à 6, dans lequel les logements d'arrêt (32) et les appuis de conduites ou bien de câbles sont positionnés à une hauteur qui guident les conduites (12) et/ou câbles (22) individuels d'une manière appropriée à ladite structure d'appui.

8. Ensemble selon l'une quelconque des revendications 1 à 7, dans lequel le pont de décharge de traction (26) est formé par une pièce moulée par injection en matière plastique.

9. Ensemble selon l'une quelconque des revendications 1 à 8, dans lequel ladite portion de base (24) fixée sur la machine est formée par une pièce moulée par injection, en particulier en matière plastique.
